# FASCICULE DE BREVET EUROPEEN

(11) **EP 0 443 937 B1**
(45) Date de publication et mention de la délivrance du brevet: **08.06.1994**
(21) Numéro de dépôt: 91400436.1
(22) Date de dépôt: 19.02.1991
(51) Int. Cl.: G01P 3/44

(54) **Capteur de vitesse pour sortie de transmission**
Geschwindigkeitsmessaufnehmer für den Ausgang eines Getriebes
Speed sensor for transmission output

(30) Priorité: 20.02.1990 US 481494
(43) Date de publication de la demande: 28.08.1991
(73) Titulaire: SNR ROULEMENTS, F-74010 Annecy (FR)
(72) Inventeur: Lugosi, Robert, F-75116 Paris (FR); Hilby, James A., F-75116 Paris (FR)
(74) Mandataire: Ballot, Paul Denis Jacques

(56) Documents cités:
- EP-A- 0 388 566
- GB-A- 2 043 256
- US-A- 3 716 788
- US-A- 4 875 785
- US-A- 4 915 512

## Description

En vue de réduire le travail de reconception de transmissions automobiles standard pour y incorporer un capteur de vitesse de sortie fiable, le présent inventeur a développé un nouveau capteur de vitesse de sortie de transmission qui ne nécessite que peu ou pas du tout d'espace supplémentaire dans le boîtier de transmission.

Bien que la technologie des moteurs, de la suspension et de la propulsion ait connu des perfectionnements mécaniques importants, la dernière décennie peut être caractérisée par une révolution électronique dans l'industrie automobile.

Des unités de commande électronique (UCE) recueillent des informations provenant de capteurs et commandent l'action de nombreuses fonctions vitales dans l'automobile d'aujourd'hui. Il y a quatre catégories majeures dans lesquelles les commandes électroniques ont fait des incursions importantes : (1) le moteur, (2) la transmission, (3) la suspension, et (4) la commande de freinage/traction antibloquant. Dans l'ensemble de ces cas, les signaux du déplacement en rotation ou du changement de position de composants sont délivrés à l'unité de commande électronique (UCE), laquelle les compare à une valeur idéale calculée ou programmée pour les conditions de fonctionnement. L'unité de commande électronique lance alors des modifications dans la fonction contrôlée, afin de réduire l'écart avec les conditions idéales. Pour que cette procédure soit mise en pratique de façon efficace, il faut que les systèmes de détection soient très fiables, aient une bonne résolution et soient économiques.

Pour détecter le déplacement et/ou la position dans une automobile, quatre systèmes distincts ont été développés jusqu'à présent : (1) les capteurs passifs ou à réluctance variable, (2) les capteurs actifs tels que les capteurs à effet Hall, (3) les capteurs optiques, et (4) les accéléromètres. Les capteurs à réluctance variable sont utilisés surtout dans les systèmes de freinage antibloquant (ABS) pour détecter la vitesse des roues et dans les capteurs de vitesse de sortie de transmission automatique. Quant aux capteurs à effet Hall, on les retrouve le plus souvent dans les systèmes d'allumage, alors que les capteurs optiques et les accéléromètres sont utilisés dans les systèmes de contrôle de suspension.

La présente invention concerne tout d'abord des capteurs servant à détecter la vitesse de sortie de transmissions automobiles. Généralement, on utilise des capteurs à réluctance variable pour détecter la vitesse de sortie de transmission. En pratique, ces capteurs mesurent le changement d'intensité d'un champ magnétique lorsqu'un anneau d'excitateur ferromagnétique ou roue dentée passe devant un détecteur. A savoir que les dents mobiles de l'anneau d'excitateur modifient le flux magnétique au voisinage du détecteur à réluctance variable, soit une bobine et un aimant, et que des impulsions de courant électrique sont induites. Le signal de sortie de la bobine est sinusoïdal, avec une amplitude proportionnelle à la vitesse de l'anneau d'excitateur. La fréquence du signal émis par le détecteur est utilisée pour calculer la vitesse de rotation de la transmission.

Le brevet US n° 3 716 788 au nom de Nishida décrit un capteur à réluctance variable classique qui est ajouté à un roulement de roue pour mesurer la vitesse de l'arbre.

Un rotor denté est formé sur une bague intérieure de palier à roulement tournante, opposée à un stator denté monté sur une bague extérieure de palier à roulement, fixe. La bague extérieure du palier à roulement supporte également le détecteur ou capteur à bobine magnétique qui produit une tension en fonction des changements du flux magnétique induits par l'alignement des dents du rotor et du stator pendant la rotation. La fréquence du courant alternatif produit est proportionnelle à la vitesse de rotation de l'arbre.

Un capteur de vitesse de type similaire est décrit dans le brevet US n° 3 826 933 au nom d'Anselmino. Ce capteur de vitesse comporte un enroulement de détection magnétique ou détecteur monté sur la bague fixe d'un palier, alors qu'une roue avec des dents ferromagnétiques est montée sur la bague tournante du roulement à rouleaux.

Le problème que l'on rencontre en utilisant des capteurs à réluctance variable pour mesurer la vitesse de sortie d'une transmission réside dans la pratique courante de prévoir un anneau excitateur séparé ou roue dentée, avec une pluralité de dents, positionné sur l'arbre de sortie de transmission. Ces capteurs à réluctance variable nécessitent l'ajout d'un anneau excitateur séparé à la transmission, ce qui prend un espace précieux, augmente le coût du produit ainsi que le poids total de la transmission. En pratique, on ne dispose pas de l'espace nécessaire pour des systèmes de détection à réluctance variable classiques sans que le capteur ne soit spécialement conçu dans une transmission entièrement nouvelle. Par exemple, dans une voiture particulière à propulsion arrière type, pour adapter un capteur dans la transmission, on doit prendre en considération l'espace supplémentaire pour un anneau excitateur, au détriment de certains autres paramètres de conception importants, tels que la dimension hors tout.

Un autre problème lié à l'utilisation, dans des capteurs à réluctance variable, d'anneaux excitateurs séparés, réside dans le fait que le mouvement de l'anneau excitateur peut entraîner des imprécisions dans les mesures du champ magnétique.

Tout capteur qui réduirait la conception mécanique du système et satisferait aux exigences de performance, de fiabilité et de coût serait considéré comme extrêmement avantageux par les concepteurs automobiles. Par conséquent, il a été souvent fixé pour tâche de développer un capteur de vitesse de sortie de transmission qui ne nécessite que peu ou pas du tout d'espace supplémentaire dans la transmission, qui soit très fiable, et qui soit d'un bon rapport coût-efficacité.

Dans ce sens, la demande de brevet européen EP O 388 566 décrit une butée axiale comportant une extension radiale annulaire destinée au montage d'un émetteur et faisant face à une seconde bague de butée sur laquelle est monté un capteur délivrant des signaux proportionnels à une vitesse de rotation.

Ainsi il est prévu de réaliser une butée axiale intégrant un capteur à réluctance variable et une butée axiale avec un capteur à effet Hall. Vu qu'il existe des butées axiales avec des capteurs à effet Hall ou des capteurs à réluctance variable, comme il ressort du brevet US n° 4 875 785 au nom de Santos et al., le présent inventeur a seulement reconçu la butée axiale d'une transmission automobile pour y incorporer un capteur à effet Hall ou un capteur à réluctance variable.

C'est ainsi que le capteur de vitesse de sortie de transmission comprend un capteur à effet Hall ou un capteur à réluctance variable positionné autour d'une butée axiale d'une transmission automobile. La butée axiale est typiquement montée autour du boîtier de différentiel qui tourne à la même vitesse que l'arbre de sortie de transmission et comprend un palier axial entre une première plaque de butée et une seconde plaque de butée. La seconde plaque de butée tourne par rapport à la première plaque de butée. De plus, la seconde plaque de butée est rallongée, de sorte qu'elle peut former un chemin de roulement pour le palier de butée axiale, et également servir de support à une partie radiale fournissant en permanence un champ magnétique. Un élément capteur ou détecteur est disposé en face de ladite partie radiale afin de détecter le champ magnétique.

Dans une forme de réalisation, le champ magnétique est produit par un moyen supporté par ladite partie radiale de la seconde plaque de butée. Le moyen magnétique consiste, de préférence, en une pluralité de segments à pôles magnétiques magnétisés en permanence disposés autour de la circonférence entière de ladite partie radiale de la seconde plaque de butée. L'élément capteur ou détecteur servant à détecter le champ magnétique dans cette forme de réalisation préférée est un capteur à effet Hall.

Selon l'invention, la seconde plaque de butée peut être rallongée et comporter des fentes régulièrement espacées autour d'une partie radiale. La plaque de butée à fentes est positionnée en face d'un élément capteur ou détecteur apte à détecter une variation du champ magnétique induite par la plaque de butée à fentes de sorte que l'utilisation d'une roue dentée séparée est éliminée. La seconde plaque de butée comprend typiquement un matériau ferromagnétique. L'élément capteur ou détecteur est soit un détecteur à réluctance variable, soit un détecteur à courant de Foucault.

Eventuellement, les dents situées autour de la périphérie à fentes de la seconde plaque de butée peuvent être coudées par rapport au détecteur, de façon à augmenter le champ magnétique.

L'invention, ainsi que ses nombreux avantages, seront mieux compris en se référant à la description détaillée suivante, et aux dessins annexés dans lesquels :
- la Fig. 1 est une vue schématique en coupe d'un dispositif de transmission de l'état de la technique comportant une butée axiale qui contient un moyen pour générer un champ magnétique, lequel est détecté par un capteur à effet Hall,
- la Fig. 2 est une vue schématique en coupe d'un exemple de réalisation selon la présente invention, dans lequel une plaque de butée à fentes de butée axiale induit une variation de champ magnétique qui est détectée par un capteur à réluctance variable;
- la Fig. 3 est une vue schématique en coupe d'un autre exemple de réalisation selon la présente invention dans lequel la plaque de butée à fentes comporte des dents coudées;
- la Fig. 4 est une vue à plus grande échelle du détail A de la Fig. 2, illustrant un détecteur à réluctance variable et une plaque de butée à fentes;
- la Fig. 5 est une vue de côté de la plaque de butée à fentes de la Fig. 4;
- la Fig. 6 est une vue à échelle agrandie du détail A' de la Fig 3 illustrant un détecteur à réluctance variable et une plaque de butée à fentes avec des dents coudées;
- la Fig. 7 est une vue en plan de la plaque de butée à fentes avec dents coudées de la Fig. 6; et
- la Fig. 8 est une vue de côté de la même plaque de butée en fig. 7.

Les nouveaux capteurs de vitesse de sortie de transmission selon la présente invention nécessitent l'insertion du détecteur approprié et l'intégration d'un moyen capable de générer un champ magnétique dans une butée axiale à aiguilles placée autour d'un boîtier de différentiel d'une transmission automobile afin d'éviter une modification structurelle de la transmission elle-même.

L'utilisation d'un capteur à effet Hall pour mesurer la vitesse de sortie d'une transmission a obligé le présent inventeur à modifier la plaque de butée tournante ou bague intérieure d'une butée axiale pour loger un aimant multipolaire. Une sonde de détection remplaçable est alors montée à l'intérieur du boîtier de transmission. La conception de la sonde de détection permet de conserver de bonnes tolérances dimensionnelles en ce qui concerne l'entrefer. La sonde de détection renferme un élément de Hall procurant une aptitude de détection de vitesse "proche de zéro" et des signaux de sortie numériques. Comme, dans la plupart des cas, les butées axiales à aiguilles sont des pièces classiques de transmissions automatiques, l'installation d'un capteur à effet Hall ne nécessite qu'une reconception minimale de la transmission et absolument aucune modification dimensionnelle selon l'axe longitudinal.

Le capteur à effet Hall fonctionne de la manière suivante. Lorsque chaque segment de polarité alternée passe devant l'élément capteur ou détecteur, la polarité et l'intensité du champ magnétique entraîne la production de signaux électriques par le détecteur. Ce signal de tension peut être alors traité par des circuits pour produire un signal de sortie indiquant une unité incrémentale de déplacement angulaire. L'unité incrémentale de déplacement angulaire est égale au nombre de degrés d'arc de chaque segment polaire. Le signal de sortie peut être un signal analogique ou numérique, en fonction du circuit électronique de traitement du signal qui se trouve dans le détecteur. Les modifications d'amplitude du signal de sortie indiquent le déplacement angulaire incrémental. Le signal de sortie de déplacement angulaire peut être également traité par un circuit intégré dans le détecteur pour générer un signal de position, un signal de vitesse ou un signal d'accélération. Le fait de magnétiser l'élément rotatif en prévoyant un nombre important de segments permet une résolution très élevée. Eventuellement, il est prévu, conformément à la présente invention, d'utiliser un capteur à réluctance variable pour mesurer la vitesse de sortie d'une transmission. Ceci requiert la modification de la plaque de butée tournante ou bague intérieure de la butée axiale, pour y inclure des fentes disposées autour d'une partie radiale. La plaque de butée à fentes est fabriquée en un matériau ferromagnétique de sorte qu'elle est apte à modifier un champ magnétique permanent. Un détecteur à réluctance variable, soit un détecteur comprenant un aimant et une bobine, est monté de façon remplaçable dans le boîtier de transmission. A nouveau, comme la butée axiale est une pièce classique de transmissions automatiques en sortie, l'installation d'un capteur à réluctance variable avec une plaque de butée à fentes ne nécessite qu'une reconception minimale de la transmission sans aucune modification dimensionnelle axiale en longueur.

Le capteur à réluctance variable selon la présente invention fonctionne de la manière suivante. L'élément capteur ou détecteur mesure typiquement la variation de l'intensité de champ magnétique lorsqu'une plaque de butée ferromagnétique à fentes passe devant le détecteur. A savoir que la configuration à fentes de la plaque de butée se traduit par une intensité de champ plus basse pour les fentes et une intensité de champ plus élevée pour les dents. On utilise la fréquence du signal du détecteur pour calculer la vitesse en rotation d'une plaque de butée à fentes montée sur un arbre de transmission.

Dans un autre exemple de réalisation, on prévoit de couder les dents sur le pourtour de la plaque de butée à fentes. On opère ainsi pour augmenter l'intensité de champ engendrée par la plaque de butée à fentes afin d'améliorer la précision de détection.

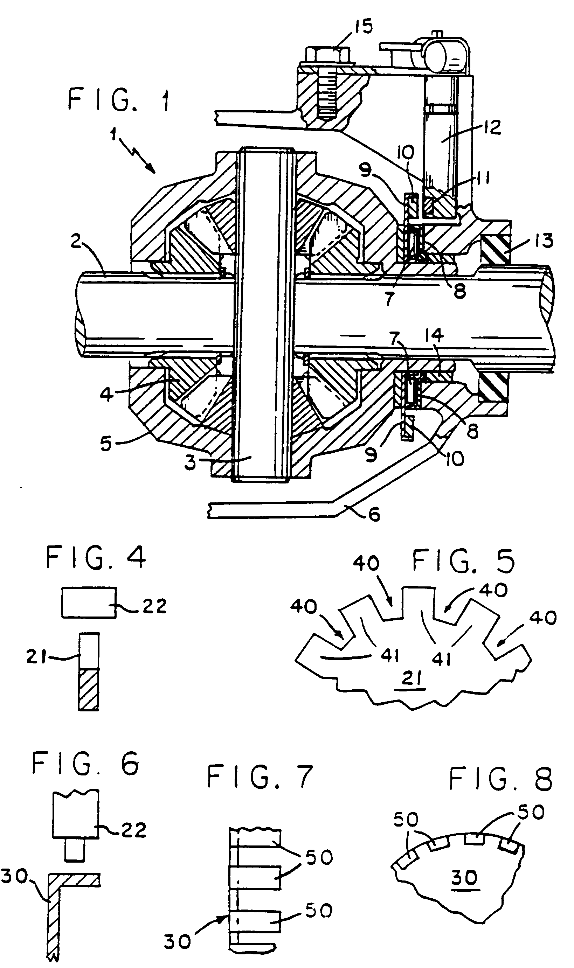

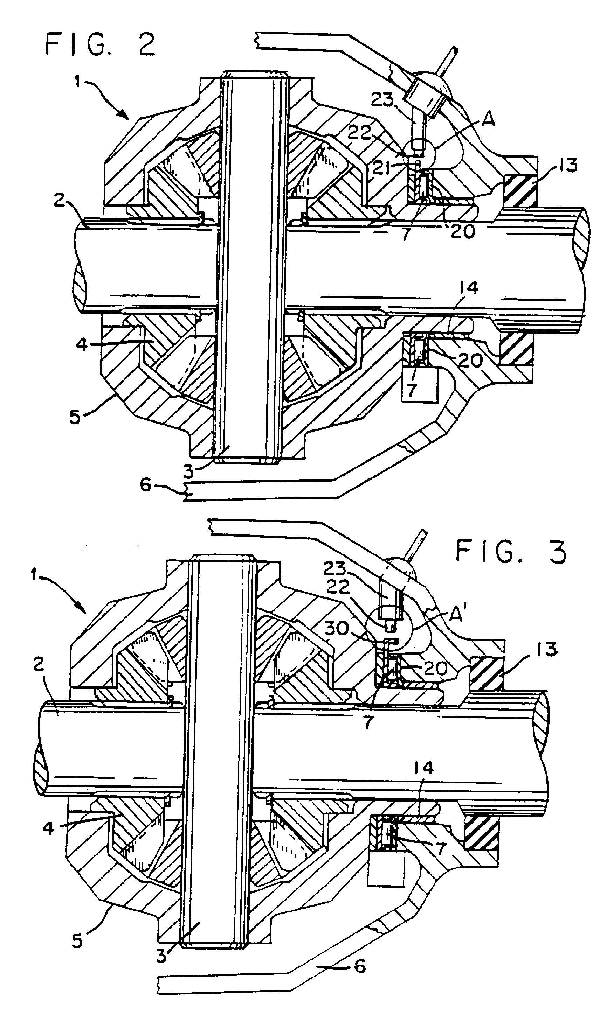

En se référant aux dessins, et plus particulièrement à la Fig. 1 représentant l'état de la technique, un capteur de butée axiale est utilisé pour détecter la vitesse de sortie d'un dispositif de transmission 1 comprenant un arbre de transmission 2, un élément différentiel 3, des pignons de différentiel 4, un boîtier de différentiel 5, un boîtier de transmission 6 et une butée axiale 7 placée autour du boîtier différentiel 5. La butée axiale comprend un palier à aiguilles 7 placé entre une première plaque de butée 8 et une seconde plaque de butée 9 qui est apte à tourner par rapport à la première plaque de butée 8. La seconde plaque de butée 9 est rallongée de manière à procurer un chemin pour le palier 7, tout en étant également apte à supporter sur une partie radiale un moyen 10 pour produire en permanence un champ magnétique. Un détecteur 11, logé à l'intérieur d'une sonde de détection remplaçable 12, est disposé en face du moyen magnétique 10 pour détecter le champ magnétique produit lorsque le moyen magnétique 10 passe devant le détecteur 11.

De préférence, le détecteur 11 est un détecteur à effet Hall. Le détecteur à effet Hall 11 est logé dans une sonde de détection 12 de manière à être positionné à l'intérieur du champ magnétique produit par le moyen magnétique 10.

Le moyen magnétique 10 procurant un champ magnétique permanent consiste, en pratique, en une pluralité de segments à pôles magnétisés de façon permanente, disposés autour de la circonférence entière de ladite partie radiale de la seconde plaque de butée 9. Chaque segment à pôles magnétiques présente un pôle Nord et un pôle Sud et les segments sont arrangés de telle sorte que chaque pôle se trouve entre deux pôles de polarités opposées. Le moyen magnétique 10 est, de préférence, un anneau en matériau ferromagnétique qui s'adapte dans la plaque de butée 9 afin d'éviter le besoin d'un élément magnétique séparé et la reconception de la transmission 1.

La transmission 1 comprend également un joint 13 et un coussinet 14. La sonde de détection 12 est montée remplaçable dans le boîtier de transmission 6 par l'intermédiaire d'un moyen de fixation ou vis 15.

La Fig. 2 illustre un exemple de réalisation selon la présente invention, dans lequel un capteur à réluctance variable pour butée axiale est utilisé pour détecter la vitesse de sortie d'un dispositif de transmission 1. La transmission 1 comprend un arbre de sortie de transmission 2, un élément différentiel 3, des pignons de différentiel 4, un boîtier de différentiel 5, un boîtier de transmission 6, une butée axiale disposée autour du boîtier de différentiel 5. La butée axiale comprend un palier axial 7 placée entre une première plaque de butée 20 et une seconde plaque de butée 21 qui est apte à tourner relativement à la première plaque de butée 20. La seconde plaque de butée 21 est rallongée et présente des fentes disposées autour d'une partie radiale. Un élément capteur ou détecteur 22 est placé dans une sonde de détection 23 et fait face aux fentes de la seconde plaque de butée 21 pour détecter un champ magnétique produit à partir de celle-ci afin de supprimer l'utilisation d'une roue dentée séparée.

La seconde plaque de butée à fentes 21 est fabriquée en un matériau ferromagnétique et induit une variation dans un champ magnétique qui est mesurée par l'élément capteur ou détecteur 22. De préférence, le détecteur 22 est un détecteur à réluctance variable ou un détecteur à courant de Foucault. La relation entre le détecteur 22 et la seconde plaque de butée à fentes 21 apparaît à la Fig. 4. La Fig. 5 est une vue partielle de côté de la seconde plaque de butée à fentes 21 et elle illustre des fentes 40 disposées entre des dents 41.

Comme le montre la Fig. 3, la seconde plaque de butée à fentes 30 peut éventuellement comporter des dents qui sont coudées par rapport au détecteur 22. On pense ainsi améliorer la détection du champ magnétique lorsque la seconde plaque de butée à fentes 30 passe devant le détecteur 22. La Fig. 6 montre la relation entre le détecteur 22 et la seconde plaque de butée à fentes 30 comportant des dents coudées. La Fig. 7 est une vue de dessus en plan de la seconde plaque de butée à fentes 30 de la Fig. 6 et elle illustre les dents coudées 50. La Fig. 8 est une vue de côté partielle de la seconde plaque de butée à fentes 30 de la Fig. 7 qui montre les dents coudées 50.

Parfois, il se peut qu'on ne puisse pas fabriquer la bague de butée en un matériau ferromagnétique optimal, et que ses dimensions inhérentes ne soient pas les plus propices pour induire une variation du champ magnétique. Afin d'optimiser les performances de détection d'une telle bague de butée, on peut alors y fixer un élément en matériau aux qualités ferromagnétiques supérieures et de dimensions choisies.

## Revendications

1. Capteur de butée axiale servant à détecter la vitesse de sortie d'un dispositif de transmission qui comprend un arbre de transmission (2), un élément différentiel (3), des pignons de différentiel (4), un boîtier de différentiel (5), un boîtier de transmission (6), et une butée axiale (7) disposée autour de l'arbre de transmission et comportant un palier axial placé entre une première plaque de butée (8 ou 20) et une seconde plaque de butée (21) qui est apte à tourner par rapport à la première plaque de butée et qui est rallongée de manière à servir de support à une partie radiale, et en face de laquelle est disposé un élément capteur, la seconde plaque de butée (21) présente des fentes disposées autour de ladite partie radiale rallongée et induit une variation dans un champ magnétique permanent, l'élément capteur (22) est disposé en face de ces fentes pour détecter cette variation du champ magnétique produit par la seconde plaque de butée (21) de sorte qu'est ainsi éliminé l'emploi d'une roue dentée séparée.

2. Capteur de butée axiale selon la revendication 1, caractérisé en ce que la seconde plaque de butée (21) comprend un matériau ferromagnétique.

3. Capteur de butée axiale selon la revendication 1 ou 2, caractérisé en ce que ledit élément capteur (22) est un détecteur à réluctance variable.

4. Capteur de butée axiale selon la revendication 1 ou 2, caractérisé en ce que ledit élément capteur (22) est un détecteur à courant de Foucault.

5. Capteur de butée axiale selon la revendication 1, caractérisé en ce que ledit élément capteur (22) est un détecteur à effet Hall.

6. Capteur de butée axiale selon l'une des revendications 1 à 5, caractérisé en ce que les dents (41) situées autour de la périphérie à fentes (40) de la seconde plaque de butée (21) sont coudées par rapport à l'élément capteur (22).

## Patentansprüche

1. Axialer Anschlagmeßaufnehmer zur Feststellung der Ausgangsgeschwindigkeit einer Getriebeanordnung, die eine Getriebewelle (2), ein Differentialbauteil (3), ein Differentialritzel (4), ein Differentialgehäuse (5), ein Getriebegehäuse (6) und einen Axialanschlag (7) aufweist, der um die Getriebewelle herum angeordnet ist und ein Axiallager aufweist, das zwischen einer ersten Anschlagplatte (8 oder 20) und einer zweiten Anschlagplatte (21) angeordnet ist, welche bezüglich der ersten Anschlagplatte drehbar ist und welche derart verlängert ist, daß sie als Halterung dient für einen radialen Abschnitt, wobei ihr gegenüber ein Fühlerteil angeordnet ist und wobei die zweite Anschlagplatte (21) Schlitze aufweist, die um den verlängerten radialen Abschnitt herum angeordnet sind und eine Veränderung in einem permanenten Magneten hervorruft, während das Fühlerteil (22) gegenüber diesen Schlitzen angeordnet ist, um die durch die zweite Anschlagplatte (21) hervorgerufene Veränderung des Magnetfeldes festzustellen, derart, daß die Verwendung eines eigenen Zahnrades überflüssig ist.

2. Axialer Anschlagmeßaufnehmer nach Anspruch 1, dadurch gekennzeichnet, daß die zweite Anschlagplatte (21) ein ferromagnetisches Material enthält.

3. Axialer Anschlagmeßaufnehmer nach Ansprüchen 1 oder 2, dadurch gekennzeichnet, daß das Fühlerteil (22) ein Detektor mit variablem magnetischen Widerstand ist.

4. Axialer Anschlagmeßaufnehmer nach Ansprüchen 1 oder 2, dadurch gekennzeichnet, daß das Fühlerteil (22) ein Foucault-Strom-Detektor ist.

5. Axialer Anschlagmeßaufnehmer nach Anspruch 1, dadurch gekennzeichnet, daß das Fühlerteil (22) ein Hall-Effekt-Detektor ist.

6. Axialer Anschlagmeßaufnehmer nach einem der Ansprüche 1 bis 5, dadurch gekennzeichnet, daß die um den Umfang der Schlitze (40) der zweiten Anschlagplatte (21) herum angeordneten Zähne (41) bezüglich des Fühlerteils (22) gekröpft sind.

## Claims

1. An axial stop sensor serving to detect the output speed of a transmission device which comprises a transmission shaft (2), a differential member (3), differential pinions (4), a differential casing (5), a transmission casing (6), and an axial stop (7) disposed around the transmission shaft and comprising an axial bearing placed between a first stop plate (8 or 20) and a second stop plate (21) which is adapted to rotate with respect to the first stop plate and which is lengthened so as to serve as support to a radial part, and facing which is disposed a sensor component, the second stop plate (21) has slots disposed around the said lengthened radial part and induces a variation in a permanent magnetic field, the sensor component (22) is disposed facing these slots in order to detect this variation of the magnetic field produced by the second stop plate (21) so that the use of a separate toothed wheel is thus eliminated.

2. The axial stop sensor according to Claim 1, characterised in that the second stop plate (21) comprises a ferromagnetic material.

3. The axial stop sensor according to Claim 1 or 2, characterised in that the said sensor component (22) is a variable reluctance detector.

4. The axial stop sensor according to Claim 1 or 2, characterised in that the said sensor component (22) is an eddy current detector.

5. The axial stop sensor according to Claim 1, characterised in that the said sensor component (22) is a Hall effect detector.

6. The axial stop sensor according to any of Claims 1 to 5, characterised in that the teeth (41) situated around the periphery with slots (40) of the second stop plate (21) are bent in relation to the sensor component (22).
